# EUROPÄISCHE PATENTSCHRIFT

(11) **EP 2 717 569 B1**
(45) Veröffentlichungstag und Bekanntmachung des Hinweises auf die Patenterteilung: **12.02.2020**
(21) Anmeldenummer: 13186818.4
(22) Anmeldetag: 01.10.2013
(51) Int. Cl.: H04N 7/15

(54) **Verfahren und System zur Verbesserung und Erweiterung der Funktionalität eines Videotelefonats**
Method and system for improving and expanding the functionality of a video call
Procédé et système d'amélioration et d'extension de la fonctionnalité d'un appel vidéo

(30) Priorität: 05.10.2012 DE 102012019527
(43) Veröffentlichungstag der Anmeldung: 09.04.2014
(73) Patentinhaber: Deutsche Telekom AG, 53113 Bonn (DE)
(72) Erfinder: Spanknebel, Frank R., 64521 Groß-Gerau (DE); Lutz, Johannes, 68623 Lampertheim (DE); Öhlenschläger, Steven, 64853 Ober-Klingen (DE)
(74) Vertreter: Schwöbel, Thilo K.

(56) Entgegenhaltungen:
- EP-A2- 0 617 562
- US-A1- 2007 132 597
- US-A1- 2010 157 014

## Beschreibung

### Stand der Technik

Es sind Verfahren und Vorrichtungen für die Videotelefonie bekannt. Weiterhin offenbart EP 2 391 100 A1 ein Verfahren und eine Vorrichtung für ein Anrufbeantworterverfahren für die Videotelefonie, die automatische Aufnahme von eingehenden Videotelefonaten umfassend.

US 2010/0157014 A1 offenbart ein Verfahren zur Speicherung von Daten während eines Videotelefonats, wobei das Videotelefonat über mobile Geräte geführt wird. Das Verfahren weist dabei ein mobiles Gerät auf, welches eine Aufnahme eines Videotelefonats anfordert, ein Netzwerk, welches die Anfrage registriert und an einen Aufnahmeserver weiterleitet sowie den Aufnahmeserver, der die Benutzerberechtigung abfragt und die Aufnahme an einem Datenverwaltungsserver veranlasst, sowie besagten Datenverwaltungsserver.

Im geschäftlichen, aber auch im privaten Bereich ist es wünschenswert, auch einen bereits vergangenen Teil eines Gesprächs aufzeichnen zu wollen, sei es um geschäftliche Absprachen festzuhalten oder um emotionale Momente eines privaten Videotelefonats zu speichern. Ein Verfahren zur rückwärtigen Speicherung eines Videotelefonats, und seien es nur Teile davon, ist bisher nicht bekannt.

### Offenbarung der Erfindung

Eine Aufgabe der vorliegenden Erfindung ist es, ein Verfahren sowie ein darauf basierendes System bereitzustellen, bei dem ein Videotelefonat zwischen zwei Teilnehmern zeitlich rückwärtig gespeichert wird.

Diese Aufgabe wird erfindungsgemäß gelöst durch ein Verfahren zur Verbesserung der Funktionalität eines Videotelefonats unter Verwendung eines Telekommunikationsnetzes, wobei das Videotelefonat einen Videodatenstrom zwischen einem ersten Telekommunikationsendgerät und einem zweiten Telekommunikationsendgerät repräsentiert, wobei dem ersten Telekommunikationsendgerät eine erste Wiedergabevorrichtung und dem zweiten Telekommunikationsendgerät eine zweite Wiedergabevorrichtung wenigstens zugeordnet ist, wobei das Telekommunikationsnetz mindestens eine Steuereinheit zur Steuerung des Videotelefonats aufweist, wobei die Steuereinheit das Videotelefonat zwischen dem ersten Telekommunikationsendgerät und dem zweiten Telekommunikationsendgerät aufbaut, wobei der Steuereinheit mindestens ein Aufnahmespeicher wenigstens zugeordnet ist, wobei das Verfahren mindestens die folgenden Schritte umfasst:
- während des Videotelefonats wird durch das erste Telekommunikationsendgerät eine eine Aufnahmeanforderung repräsentierende erste Signalisierungsinformation an die Steuereinheit gesendet,
- die Aufnahmeanforderung wird durch das zweite Telekommunikationsendgerät mit der zweiten Wiedergabevorrichtung wiedergegeben,
- eine eine Anforderungsantwort repräsentierende zweite Signalisierungsinformation wird durch das zweite Telekommunikationsendgerät an die Steuereinheit gesendet; wobei
   - im Falle einer bestätigenden zweiten Signalisierungsinformation des zweiten Telekommunikationsendgeräts der Videodatenstrom ausgehend von einem gegenüber dem Zeitpunkt der ersten Signalisierungsinformation um ein Anfragezeitintervall von mindestens 10s zurückliegenden Zeitpunkt durch den Aufnahmespeicher gespeichert und als Speichervideodaten abrufbar bereit gestellt wird;
   - im Fall einer ablehnenden zweiten Signalisierungsinformation des zweiten Telekommunikationsendgeräts die Anforderungsantwort durch das erste Telekommunikationsendgerät mit der ersten Wiedergabevorrichtung wiedergegeben wird.

Das Anfragezeitintervall von 10s ist deutlich größer als dem Fachmann bekannte Speicherzeiten von gebräuchlichen Pufferspeichern. Diese liegen in der Regel im Bereich von Sekundenbruchteilen beziehungsweise maximal 1s bis 2s. Es kann erfindungsgemäß jedoch auch größer sein, insbesondere auch 20s oder 30s oder 40s oder 50s oder 60s oder mehr betragen. Entsprechend entspricht die Gesamtlänge des gespeicherten Gesprächs mindestens einem positiven Vielfachen des Anfragezeitintervalls, insbesondere mindestens dem einfachen dem Anfragezeitintervalls, oder mindestens dem 1,5-fachen oder 2-fachen oder 2,5-fachen oder 3-fachen.

Erfindungsgemäß ist es bevorzugt, dass neben dem ersten Telekommunikationsendgerät und dem zweiten Telekommunikationsendgerät mindestens ein weiteres zweites Telekommunikationsendgerät an dem Videotelefonat teilnimmt.

Hierdurch ist es erfindungsgemäß in vorteilhafter Weise möglich, dass auch Videotelefonate zwischen mehreren Teilnehmern, beispielsweise in einer Videokonferenz, aufgezeichnet werden können.

Als Telekommunikationsendgeräte kommen alle dem Fachmann bekannten Geräte in Frage. So können dies beispielsweise Festnetztelefone oder Mobiltelefone sein, aber auch Computer - sowohl stationäre als auch tragbare Modelle - sind als Telekommunikationsendgeräte gemeint. Weiterhin können bevorzugt auch Konferenzsysteme eingesetzt werden. Die Geräte können die für die Videotelefonie notwendigen Komponenten wie zum Beispiel ein Mikrofon, eine Kamera und/oder ein Display bereits als integralen Bestandteil aufweisen, aber auch zugeordnete Wiedergabevorrichtungen, wie zum Beispiel die an einen Fernseher angeschlossene Kamera oder die an einen Computer angeschlossene Webcam.

Gemäß einer vorteilhaften Ausführungsform ist es erfindungsgemäß bevorzugt, dass die Multimediaströme des Videotelefonats über RTP (Real-Time Transport Protocol) abgewickelt werden, während die Signalisierungsinformationen über das SIP (Session Initiation Protocol) erfolgen. Besonders bevorzugt werden beide Informationen über die gleiche SIP-Sessiongesendet.

Ferner ist es bevorzugt, wenn die Datenübermittlung verschlüsselt erfolgt, beispielsweise durch übliche, dem Fachmann bekannte Verschlüsselungsverfahren.

Gemäß einer vorteilhaften Ausführungsform ist es erfindungsgemäß bevorzugt, dass die Aufnahmeanforderung und/oder die Anforderungsantwort durch die Steuereinheit an das zweite Telekommunikationsendgerät bzw. das zweite Telekommunikationsendgerät als Signalisierungsinformation, insbesondere über das SIP, gesendet werden.

Erfindungsgemäß ist es bevorzugt, dass die Aufnahmeanforderung und/oder Anforderungsantwort über Einblendeinformationen (so genannte "Pop-Ups"), die über die erste Wiedergabevorrichtung und/oder die zweite Vorrichtung wiedergegeben werden, erfolgen.

Gemäß einer weiteren vorteilhaften Ausführungsform ist es erfindungsgemäß bevorzugt, dass der Aufnahmespeicher mindestens ein Pufferspeicher ist, wobei dieser die Speichervideodaten auch länger als die dem Fachmann bekannten Pufferzeiten speichern kann.

Besonders bevorzugt ist der Aufnahmespeicher ein Pufferspeicher, dem mindestens ein Medienspeicher wenigstens zugeordnet ist, wobei die Speicherung der Speichervideodaten durch den Medienspeicher erfolgt.

Der Medienspeicher kann dabei direkt oder indirekt an das Telekommunikationsnetz und insbesondere an den Pufferspeicher angeschlossen sein. Ganz besonders bevorzugt weist der Medien- und/oder Pufferspeicher eine Anbindung an das Internet auf, wobei über die Anbindung die Speichervideodaten abgerufen werden können.

Insbesondere kann also ein Aufnahmespeicher in einem Gehäuse und insbesondere auf dem gleichen physischen Speicherbereich einen als Pufferspeicher betriebenen Speicherbereich und einen als Medienspeicher betriebenen Speicherbereich aufweisen. Ferner ist es bevorzugt, den Medienspeicher getrennt zu halten von dem Pufferspeicher. Hierdurch wird erfindungsgemäß der technische Vorteil erzielt, dass Wartung und Erweiterung des Medienspeichers einfacher möglich sind und/oder der Medienspeicher zum Beispiel durch andere Firmen als den Telekommunikationsnetzbetreiber bereitgestellt werden können.

Gemäß einer weiteren bevorzugten Ausführungsform können die Speichervideodaten nur nach erfolgreicher Authentisierung abgerufen werden. Vorteilhafterweise werden dazu nach bestätigender Anforderungsantwort Informationen über die erste und/oder die zweite Wiedergabevorrichtung wiedergegeben, die direkt oder indirekt den benötigten Authentisierungsdaten entsprechen.

Gemäß einer weiteren bevorzugten Ausführungsform ist es erfindungsgemäß bevorzugt, dass die Speichervideodaten den Videodatenstrom des Videotelefonats von Beginn an umfassen oder Teile des Videodatenstroms umfassen, wobei mindestens ein Teil des Videotelefonats zum Zeitpunkt der Aufnahmeanforderung bereits mindestens um das Anfragezeitintervall zurück liegt.

Ferner ist es erfindungsgemäß bevorzugt, dass das Verfahren zusätzlich die Schritte umfasst, wonach
- die Aufnahmeanforderung durch das zweite Telekommunikationsendgerät eingeschränkt bejaht wird, insbesondere dahingehend, dass ein anderes Anfragezeitintervall vorgeschlagen wird;
- durch das zweite Telekommunikationsendgerät eine eine weitere Aufnahmeanforderung repräsentierende dritte Signalisierungsinformation an die Steuereinheit gesendet wird,
- die weitere Aufnahmeanforderung durch das erste Telekommunikationsendgerät mit der ersten Wiedergabevorrichtung wiedergegeben wird,
- eine eine weitere Anforderungsantwort repräsentierende vierte Signalisierungsinformation durch das erste Telekommunikationsendgerät an die Steuereinheit gesendet wird; wobei
   - im Falle einer bestätigenden vierten Signalisierungsinformation des ersten Telekommunikationsendgeräts der Videodatenstrom ausgehend von einem gegenüber dem Zeitpunkt der ersten Signalisierungsinformation um das neue Anfragezeitintervall zurückliegenden Zeitpunkt durch den Aufnahmespeicher gespeichert und als Speichervideodaten abrufbar bereit gestellt wird;
   - im Fall einer ablehnenden vierten Signalisierungsinformation des ersten Telekommunikationsendgeräts die weitere Anforderungsantwort durch das zweite Telekommunikationsendgerät mit der zweiten Wiedergabevorrichtung wiedergegeben wird;
   - bevorzugt im Fall einer einschränkenden vierten Signalisierungsinformation gemäß diesem Anspruch das hier beschriebene Verfahren erneut ausgeführt wird.

Es ist hierdurch gemäß der vorliegenden Erfindung in vorteilhafter Weise möglich, dass auch dann eine Speicherung der Speichervideodaten erfolgt, wenn zwar das erste Telekommunikationsendgerät und das zweite Telekommunikationsendgerät beide eine Speicherung der Speichervideodaten wünschen, aber zunächst Uneinigkeit über das Anfragezeitintervall besteht, indem abwechselnde Anfragen erfolgen, bis Einigkeit erzielt wird.

Gemäß einer weiteren vorteilhaften Ausführungsform ist es erfindungsgemäß bevorzugt, dass die Speichervideodaten über eine Datenverbindung im Internet oder über ein anderes Medium zum Abruf durch das erste Telekommunikationsendgerät und/oder das zweite Telekommunikationsendgerät und/oder ein weiteres Telekommunikationsendgerät bereitgestellt werden, insbesondere lediglich für eine befristete Zeit.

Es ist hierdurch gemäß der vorliegenden Erfindung in vorteilhafter Weise möglich, dass das erste beziehungsweise zweite Telekommunikationsendgerät die Speichervideodaten nicht direkt und selbst abrufen müssen, sondern dies nachholen können, wenn bessere Bedingungen vorliegen. So zum Beispiel, falls eines der Telekommunikationsendgeräte ein Mobiltelefon ist, dessen Speicher nicht ausreicht um die Speichervideodaten aufzunehmen oder es aus Kostengründen sinnvoller erscheint, die Speichervideodaten beispielsweise von einem Computer aus abzurufen und zu speichern.

Ferner ist es dadurch vorteilhaft möglich, den Speicherbedarf des Aufnahmespeichers zu begrenzen, wenn die Speichervideodaten nicht unbegrenzt oder bis zu einem Abruf, der wiederum unbegrenzt erfolgen kann, vorgehalten werden.

Weiterhin ist es erfindungsgemäß bevorzugt, dass das Anfragezeitintervall festgelegt ist, insbesondere auf die letzten 5min oder die letzten 10min des Videotelefonats.

Es ist hierdurch gemäß der vorliegenden Erfindung in vorteilhafter Weise möglich, dass das Verfahren für die beteiligten Telekommunikationsendgeräte vereinfacht und beschleunigt wird, da bereits im Vorfeld feststeht, welchen Zeitraum die Speichervideodaten umfassen werden und das zweite Telekommunikationsendgerät daher die Anforderungsantwort schneller geben kann.

Besonders bevorzugt wird das Anfragezeitintervall durch das Telekommunikationsnetz festgelegt, insbesondere abhängig von der Netzauslastung und/oder von der Speicherbelegung des Aufnahmespeichers.

Es ist hierdurch gemäß der vorliegenden Erfindung in vorteilhafter Weise möglich, dass das Verfahren nicht unvorhergesehen abbricht, da die Speicherung der Speichervideodaten auf Grund fehlenden freien Speicherplatzes auf dem Aufnahmespeicher nicht möglich ist. Es ist vorstellbar, dass die Steuereinheit dem ersten und/oder zweiten Telekommunikationsendgerät sendet, die dann auf den entsprechenden Wiedergabevorrichtungen wiedergegeben wird, falls das seitens des ersten Telekommunikationsendgeräts vorgesehene Anfragezeitintervall das durch die beim Aufnahmespeicher verfügbare Speichermenge bedingte und/oder das durch die Netzauslastung bedingte Anfragezeitintervall überschreitet. Weiterhin ist es vorstellbar, dass bei unzureichender freier Speichermenge des Aufnahmespeichers die ältesten Speichervideodaten überschrieben und/oder gelöscht werden und insbesondere die betreffenden Telekommunikationsendgeräte darüber informiert werden über geeignete technische Mittel.

Ganz besonders bevorzugt wird das Anfragezeitintervall durch das erste Telekommunikationsendgerät und/oder das zweite Telekommunikationsendgerät frei wählbar oder in gestaffelten Zeitintervallen festgelegt.

Hierdurch ist es gemäß der vorliegenden Erfindung in vorteilhafter Weise möglich, dass so genau wie möglich nur die Teile des Videotelefonats gespeichert werden, die zur Speicherung vorgesehen sind, ohne bedingt durch starre Anfragezeitintervalle nicht benötigte Teile in die Speichervideodaten aufzunehmen, was insbesondere die benötigte Speichermenge reduziert.

Weiterhin ist es gemäß einer vorteilhaften Ausführungsform erfindungsgemäß möglich, dass die Dauer der Speichervideodaten einer zeitlichen und/oder datenvolumenmäßigen Obergrenze unterliegt.

Es ist hierdurch gemäß der vorliegenden Erfindung in vorteilhafter Weise möglich, dass die benötigte Speicherkapazität des Aufnahmespeichers besser abgeschätzt werden kann und so überflüssige und/oder fehlende Speicherkapazität vermieden werden kann, wodurch wiederum Kosten vermieden werden.

Besonders bevorzugt erfolgt die erste Signalisierungsinformation durch Betätigung virtueller und/oder physischer Schaltelemente des ersten Telekommunikationsendgeräts.

Es ist hierdurch gemäß der vorliegenden Erfindung in vorteilhafter Weise möglich, dass je nach Art und/oder Beschaffenheit des Telekommunikationsendgeräts, also zum Beispiel Mobiltelefon, Festnetztelefon oder Computer, mögliche Bedienungsvarianten, wie zum Beispiel eine Touch-Funktionalität und/oder vorhandene und/oder speziell für diese Funktionalität bereitgestellte Tasten am Telekommunikationsendgerät genutzt werden.

Es ist aber auch vorstellbar, dass andere, dem Fachmann bekannte Arten der Bestätigung oder Ablehnung, eingesetzt werden, so zum Beispiel Gestensteuerung und/oder Gesichtserkennung und/oder Sprachsteuerung oder eine Bestätigung über eine Fingerabdruckerkennung und/oder Netzhauterkennung.

Die erwähnte Fingerabdruckerkennung und/oder Netzhauterkennung kann erfindungsgemäß bevorzugt auch zur Authentifizierung verwendet werden.

Ganz besonders bevorzugt gilt dies auch für die zweite Signalisierungsinformation, die dann durch Betätigung virtueller und/oder physischer Schaltelemente des zweiten Telekommunikationsendgeräts erfolgt.

Ein weiterer Gegenstand der vorliegenden Erfindung ist ein System zur Verbesserung der Funktionalität eines Videotelefonats zwischen einem ersten Telekommunikationsendgerät und einem zweiten Telekommunikationsendgerät über ein Telekommunikationsnetz beansprucht, wobei das System mindestens das erste Telekommunikationsendgerät und das zweite Telekommunikationsendgerät, eine erste dem ersten Telekommunikationsendgerät wenigstens zugeordnete Wiedergabevorrichtung, eine zweite dem zweiten Telekommunikationsendgerät wenigstens zugeordnete Wiedergabevorrichtung, mindestens einen der Steuereinheit wenigstens zugeordneten Aufnahmespeicher und das Telekommunikationsnetz aufweist, wobei das Telekommunikationsnetz mindestens eine Steuereinheit zur Steuerung des Videotelefonats aufweist, wobei die Steuereinheit so konfiguriert ist, dass sie das Videotelefonat zwischen dem ersten Telekommunikationsendgerät und dem zweiten Telekommunikationsendgerät aufbaut, wobei das System so konfiguriert ist, dass
- während des Videotelefonats durch das erste Telekommunikationsendgerät eine eine Aufnahmeanforderung repräsentierende erste Signalisierungsinformation an die Steuereinheit gesendet wird,
- die Aufnahmeanforderung durch das zweite Telekommunikationsendgerät mit der zweiten Wiedergabevorrichtung wiedergegeben wird,
- eine eine Anforderungsantwort repräsentierende zweite Signalisierungsinformation durch das zweite Telekommunikationsendgerät an die Steuereinheit gesendet wird; wobei
- im Falle einer bestätigenden zweiten Signalisierungsinformation des zweiten Telekommunikationsendgeräts der Videodatenstrom ausgehend von einem gegenüber dem Zeitpunkt der ersten Signalisierungsinformation um ein Anfragezeitintervall von mindestens 10s zurückliegenden Zeitpunkt durch den Aufnahmespeicher gespeichert und als Speichervideodaten abrufbar bereit gestellt wird;
- im Fall einer ablehnenden zweiten Signalisierungsinformation des zweiten Telekommunikationsendgeräts die Anforderungsantwort durch das erste Telekommunikationsendgerät mit der ersten Wiedergabevorrichtung wiedergegeben wird.

Ferner ist es bevorzugt es für das System zur Verbesserung der Funktionalität eines Videotelefonats, dass mindestens eines der beteiligten Telekommunikationsendgeräte ein Mobilgerät ist.

Besonders bevorzugt ist der Aufnahmespeicher des Systems ein Pufferspeicher oder ganz besonders bevorzugt mindestens ein Medienspeicher, dem mindestens einem Pufferspeicher zugeordnet ist, wobei der mindestens eine Pufferspeicher der Steuereinheit wenigstens zugeordnet ist.

### Kurze Beschreibung der Zeichnungen

- **Figur 1**: zeigt schematisch ein Ausführungsbeispiel eines erfindungsgemäßen Systems.
- **Figur 2**: zeigt schematisch den beispielhaften Ablauf des erfindungsgemäßen Verfahrens, speziell die Abfolge der Aufnahmeanforderung und der Anforderungsantwort.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu interpretieren.

In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

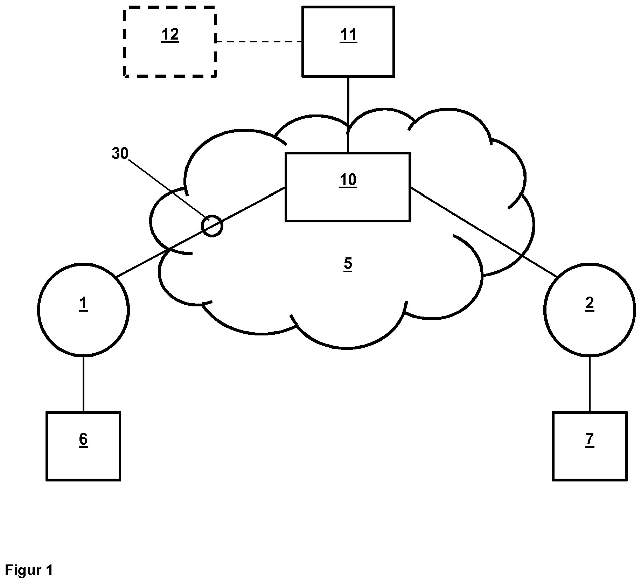

In Figur 1 ist ein schematisches Ausführungsbeispiel eines erfindungsgemäßen Systems dargestellt. Einem ersten Telekommunikationsendgerät 1 ist mindestens eine erste Wiedergabevorrichtung 6 wenigstens zugeordnet und das erste Telekommunikationsendgerät 1 ist an ein Telekommunikationsnetz 5 angeschlossen.

Erfindungsgemäß ist es vorgesehen, dass das Telekommunikationsnetz 5 eine Steuereinheit 10 zur Steuerung des Videotelefonats zwischen dem ersten Telekommunikationsendgerät 1 und einem zweiten Telekommunikationsendgerät 2 aufweist, wobei dem zweiten Telekommunikationsendgerät 2 mindestens eine zweite Wiedergabevorrichtung 7 wenigstens zugeordnet ist. Bevorzugt ist die erste Wiedergabevorrichtung 6 in das erste Telekommunikationsendgerät 1 integriert und/oder die zweite Wiedergabevorrichtung 7 in das zweite Telekommunikationsendgerät 2 integriert, besonders bevorzugt ist die erste Wiedergabevorrichtung 6 als externe Vorrichtung an das erste Telekommunikationsendgerät 1 angeschlossen und/oder die zweite Wiedergabevorrichtung 7 als externe Vorrichtung an das zweite Telekommunikationsendgerät 2 angeschlossen. Die Wiedergabevorrichtungen 6, 7 sind jeweils in der Lage einen Videodatenstrom 30 bildhaft anzuzeigen, bevorzugt werden über die jeweils gleiche Wiedergabevorrichtung 6, 7 auch Audioinformationen wiedergegeben. Besonders bevorzugt bestehen die Wiedergabevorrichtungen 6, 7 aus mindestens zwei Komponenten, wobei eine Komponente Bildinformationen und die andere Komponente Audioinformationen wiedergibt. Ganz besonders bevorzugt handelt es sich bei den Komponenten um eigenständige Vorrichtungen, die jeweils an das jeweilige Telekommunikationsendgerät 1,2 angeschlossen sind.

Dabei repräsentiert das Videotelefonat einen Videodatenstrom 30 zwischen dem ersten Telekommunikationsendgerät 1 und dem zweiten Telekommunikationsendgerät 2.

Die Übertragung des Videodatenstroms 30 erfolgt bevorzugt bidirektional zwischen dem ersten Telekommunikationsendgerät 1 und dem zweiten Telekommunikationsendgerät 2. Besonders bevorzugt wird der Videodatenstrom 30 direkt zwischen dem ersten Telekommunikationsendgerät 1 und dem zweiten Telekommunikationsendgerät 2 übertragen. Ganz besonders bevorzugt werden die Daten des Videodatenstroms 30 von dem ersten Telekommunikationsendgerät 1 an die Steuereinheit 10 und von der Steuereinheit 10 zu dem zweiten Telekommunikationsendgerät 2 übertragen. Gemäß einer weiteren vorteilhaften Ausführungsform ist es erfindungsgemäß vorgesehen, dass die Daten des Videodatenstroms 30 von dem ersten Telekommunikationsendgerät 1 an die Steuereinheit 10 und von der Steuereinheit 10 zu dem Aufnahmespeicher 11 und an das zweite Telekommunikationsendgerät 2 übertragen werden.

Gemäß noch einer weiteren vorteilhaften Ausführungsform des erfindungsgemäßen Verfahrens ist es vorgesehen, dass die Daten des Videodatenstroms 30 bidirektional zwischen dem ersten Telekommunikationsendgerät 1 und dem zweiten Telekommunikationsendgerät 2 übertragen werden und die Steuereinheit 10 und/oder der Aufnahmespeicher 11 an einer geeigneten Stelle auf die Daten des Videodatenstroms 30 zugreift, ohne den direkten Übertragungsweg zwischen dem ersten Telekommunikationsendgerät 1 und dem zweiten Telekommunikationsendgerät 2 zu unterbrechen. Dies kann an einer Stelle bidirektional, also sowohl für den Videodatenstrom 30 von dem ersten Telekommunikationsendgerät 1 zu dem zweiten Telekommunikationsendgerät 2 als auch für den Videodatenstrom 30 von dem zweiten Telekommunikationsendgerät 2 zu dem ersten Telekommunikationsendgerät 1 geschehen, als auch an unterschiedlichen Stellen unidirektional, also für jeweils eine der beiden obig beschriebenen Übertragungsrichtungen des Videodatenstroms 30.

Erfindungsgemäß ist es vorgesehen, dass der Steuereinheit mindestens ein Aufnahmespeicher 11 wenigstens zugeordnet ist, wobei dieser Aufnahmespeicher mindestens ein Pufferspeicher ist oder bevorzugt mindestens ein Medienspeicher 12, der mindestens einem Pufferspeicher wenigstens zugeordnet ist, wobei der mindestens eine Pufferspeicher der Steuereinheit 10 wenigstens zugeordnet ist. Der Aufnahmespeicher 11 speichert die Speichervideodaten 31 und stellt diese anschließend zum Abruf bereit.

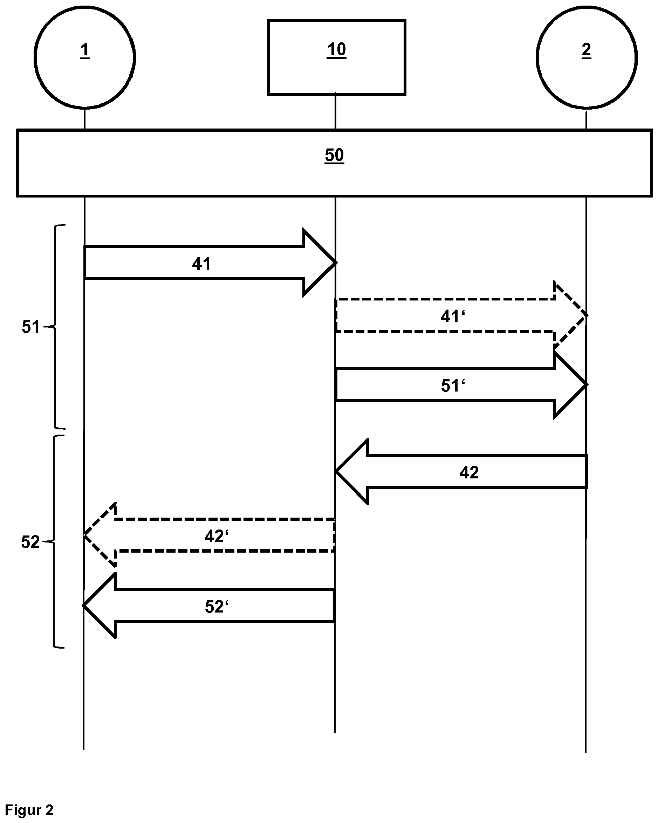

In Figur 2 ist ein schematisches Ablaufdiagramm dargestellt, in dem insbesondere die mögliche Abfolge von Aufnahmeanforderung 51 und Anforderungsantwort 52 dargestellt ist. Erfindungsgemäß ist es vorgesehen, dass in einem Schritt 50 zunächst das Videotelefonat aufgebaut wird.
Während des Videotelefonats wird durch das erste Telekommunikationsendgerät 1 eine eine Aufnahmeanforderung 51 repräsentierende erste Signalisierungsinformation 41 an die Steuereinheit 10 gesendet. Die Steuereinheit 10 sendet die Aufnahmeanforderung 51 bevorzugt als weitere erste Signalisierungsinformation 41' an das zweite Telekommunikationsendgerät 2 weiter, besonders bevorzugt sendet die Steuereinheit 10 die Aufnahmeanforderung 51 als zusätzliche Information 51' in dem Videodatenstrom 30 an das zweite Telekommunikationsendgerät 2 weiter. Die Aufnahmeanforderung 51 wird durch das zweite Telekommunikationsendgerät 2 mit der zweiten Wiedergabevorrichtung 7 wiedergegeben.

Erfindungsgemäß ist es vorgesehen, dass das zweite Telekommunikationsendgerät 2 ein eine Anforderungsantwort 52 repräsentierende zweite Signalisierungsinformation 42 an die Steuereinheit 10 sendet. Die Steuereinheit 10 sendet die Anforderungsantwort 52 bevorzugt als weitere zweite Signalisierungsinformation 42' an das erste Telekommunikationsendgerät 1 weiter, besonders bevorzugt sendet die Steuereinheit 10 die Anforderungsantwort 52 als zusätzliche Information 52' in dem Videodatenstrom 30 an das erste Telekommunikationsendgerät 1 weiter.

Im Falle einer bestätigenden zweiten Signalisierungsinformation 42 des zweiten Telekommunikationsendgerät 2 speichert der Aufnahmespeicher 11 den Videodatenstrom 30 ausgehend von einem gegenüber dem Zeitpunkt der ersten Signalisierungsinformation 41 um ein Anfragezeitintervall von mindestens 10s zurückliegenden Zeitpunkt als Speichervideodaten 31 und stellt diese zum Abruf bereit. Bevorzugt ist das Anfragezeitintervall länger als 10s. Weiterhin ist es erfindungsgemäß bevorzugt, dass am ersten Telekommunikationsendgerät 1 eine Information betreffend die Bestätigung der Aufnahmeanforderung 51 über die erste Wiedergabevorrichtung 6 wiedergegeben wird.

Im Falle einer ablehnenden zweiten Signalisierungsinformation 42 wird die Anforderungsantwort 52 oder bevorzugt eine Information betreffend die Ablehnung der Aufnahmeanforderung 51 über die erste Wiedergabevorrichtung 6 des ersten Telekommunikationsendgerät 1 wiedergegeben.

Eine Signalisierungsinformation 41, 41', 42, 42' wird dabei bevorzugt als Information entsprechend dem SIP übertragen und an dem ersten Telekommunikationsendgerät 1 und/oder zweiten Telekommunikationsendgerät 2 in eine Einblendeinformation umgewandelt. Besonders bevorzugt wird die Signalisierungsinformation 41, 42 von der Steuereinheit als zusätzliche Information in den Videodatenstrom 30, insbesondere entsprechend dem RTP, eingespeist und dort beispielsweise bereits als (bildliche) Einblendeinformation übertragen.

## Patentansprüche

1. Verfahren zur Verbesserung der Funktionalität eines Videotelefonats unter Verwendung eines Telekommunikationsnetzes (5), wobei das Videotelefonat einen Videodatenstrom (30) zwischen einem ersten Telekommunikationsendgerät (1) und einem zweiten Telekommunikationsendgerät (2) repräsentiert, wobei dem ersten Telekommunikationsendgerät (1) eine erste Wiedergabevorrichtung (6) und dem zweiten Telekommunikationsendgerät (2) eine zweite Wiedergabevorrichtung (7) wenigstens zugeordnet ist, wobei das Telekommunikationsnetz (5) mindestens eine Steuereinheit (10) zur Steuerung des Videotelefonats aufweist, wobei die Steuereinheit (10) das Videotelefonat zwischen dem ersten Telekommunikationsendgerät (1) und dem zweiten Telekommunikationsendgerät (2) aufbaut, wobei der Steuereinheit (10) mindestens ein Aufnahmespeicher (11) wenigstens zugeordnet ist, wobei das Verfahren mindestens die folgenden Schritte umfasst:
- während des Videotelefonats wird durch das erste Telekommunikationsendgerät (1) eine eine Aufnahmeanforderung (51) repräsentierende erste Signalisierungsinformation (41) an die Steuereinheit (10) gesendet,
- die Aufnahmeanforderung (51) wird durch das zweite Telekommunikationsendgerät (2) mit der zweiten Wiedergabevorrichtung (7) wiedergegeben,
- eine eine Anforderungsantwort (52) repräsentierende zweite Signalisierungsinformation (42) wird durch das zweite Telekommunikationsendgerät (2) an die Steuereinheit (10) gesendet; wobei
- im Falle einer bestätigenden zweiten Signalisierungsinformation (42) des zweiten Telekommunikationsendgeräts (2) der Videodatenstrom (30) ausgehend von einem gegenüber dem Zeitpunkt der ersten Signalisierungsinformation (41) um ein Anfragezeitintervall von mindestens 10s zurückliegenden Zeitpunkt durch den Aufnahmespeicher (11) gespeichert und als Speichervideodaten (31) abrufbar bereit gestellt wird;
- im Fall einer ablehnenden zweiten Signalisierungsinformation (42) des zweiten Telekommunikationsendgeräts (2) die Anforderungsantwort (52) durch das erste Telekommunikationsendgerät (1) mit der ersten Wiedergabevorrichtung (6) wiedergegeben wird.

2. Verfahren nach Anspruch 1, **dadurch gekennzeichnet, dass** neben dem ersten Telekommunikationsendgerät (1) und dem zweiten Telekommunikationsendgerät (2) mindestens ein weiteres zweites Telekommunikationsendgerät (2') an dem Videotelefonat teilnimmt.

3. Verfahren nach einem der vorhergehenden Ansprüche, **dadurch gekennzeichnet, dass** durch die Steuereinheit (10) die Aufnahmeanforderung (51) an das zweite Telekommunikationsendgerät (2) als weitere erste Signalisierungsinformation (41') und/oder als zusätzliche Information (51') im Videodatenstrom (30) gesendet wird.

4. Verfahren nach einem der vorhergehenden Ansprüche, **dadurch gekennzeichnet, dass** der Aufnahmespeicher (11) mindestens ein Pufferspeicher ist, wobei die Speicherung der Speichervideodaten (31) durch den Pufferspeicher oder durch mindestens einen dem Pufferspeicher wenigstens zugeordneten Medienspeicher (12) vorgenommen wird.

5. Verfahren nach einem der vorhergehenden Ansprüche, **dadurch gekennzeichnet, dass** die Speichervideodaten (31) den Videodatenstrom (30) des Videotelefonats von Beginn an umfassen oder Teile des Videodatenstroms (31) umfassen, wobei mindestens ein Teil des Videotelefonats zum Zeitpunkt der Aufnahmeanforderung bereits mindestens um das Anfragezeitintervall zurück liegt.

6. Verfahren nach einem der vorhergehenden Ansprüche, **dadurch gekennzeichnet, dass** das Verfahren zusätzlich die Schritte umfasst, wonach
- die Aufnahmeanforderung (51) durch das zweite Telekommunikationsendgerät (2) eingeschränkt bejaht wird, insbesondere dahingehend, dass ein anderes Anfragezeitintervall vorgeschlagen wird;
- durch das zweite Telekommunikationsendgerät (2) eine eine weitere Aufnahmeanforderung (53) repräsentierende dritte Signalisierungsinformation (43) an die Steuereinheit (10) gesendet wird,
- die weitere Aufnahmeanforderung (53) durch das erste Telekommunikationsendgerät (1) mit der ersten Wiedergabevorrichtung (6) wiedergegeben wird,
- eine eine weitere Anforderungsantwort (54) repräsentierende vierte Signalisierungsinformation (44) durch das erste Telekommunikationsendgerät (1) an die Steuereinheit (10) gesendet wird; wobei
- im Falle einer bestätigenden vierten Signalisierungsinformation (44) des ersten Telekommunikationsendgeräts (1) der Videodatenstrom (30) ausgehend von einem gegenüber dem Zeitpunkt der ersten Signalisierungsinformation (41) um das neue Anfragezeitintervall zurückliegenden Zeitpunkt durch den Aufnahmespeicher (11) gespeichert und als Speichervideodaten (31) abrufbar bereit gestellt wird;
- im Fall einer ablehnenden vierten Signalisierungsinformation (44) des ersten Telekommunikationsendgeräts (1) die weitere Anforderungsantwort (54) durch das zweite Telekommunikationsendgerät (2) mit der zweiten Wiedergabevorrichtung (7) wiedergegeben wird;
- bevorzugt im Fall einer einschränkenden vierten Signalisierungsinformation (44) gemäß diesem Anspruch das hier beschriebene Verfahren erneut ausgeführt wird.

7. Verfahren nach einem der vorhergehenden Ansprüche, **dadurch gekennzeichnet, dass** die Speichervideodaten über eine ungesicherte oder gesicherte Verbindung im Internet oder über ein anderes Medium zum Abruf durch das erste Telekommunikationsendgerät (1) und/oder das zweite Telekommunikationsendgerät (2) und/oder ein weiteres Telekommunikationsendgerät bereitgestellt werden, insbesondere lediglich für eine befristete Zeit.

8. Verfahren nach einem der vorhergehenden Ansprüche, **dadurch gekennzeichnet, dass** der Zugriff auf die Speichervideodaten nur nach erfolgreicher Authentifizierung zugelassen wird, bevorzugt durch Authentifizierungsdaten, die im Falle einer bestätigenden zweiten Signalisierungsinformation (42) durch das erste Telekommunikationsendgerät (1) und/oder das zweite Telekommunikationsendgerät (2) über die erste Wiedergabevorrichtung (6) und/oder zweite Wiedergabevorrichtung (7) wiedergegeben werden.

9. Verfahren nach einem der vorhergehenden Ansprüche, **dadurch gekennzeichnet, dass** das Anfragezeitintervall festgelegt ist, bevorzugt auf die letzten 5min oder die letzten 10min des Videotelefonats, oder durch das Telekommunikationsnetz (5) festgelegt ist, bevorzugt abhängig von der Netzauslastung und/oder von der Speicherbelegung des Aufnahmespeichers (11), oder durch das erste Telekommunikationsendgerät (1) und/oder das zweite (2) Telekommunikationsendgerät frei wählbar oder in gestaffelten Zeitintervallen festgelegt wird.

10. Verfahren nach einem der vorhergehenden Ansprüche, **dadurch gekennzeichnet, dass** die Dauer der Speichervideodaten (31) einer zeitlichen und/oder datenvolumenmäßigen Obergrenze unterliegt.

11. Verfahren nach einem der vorhergehenden Ansprüche, **dadurch gekennzeichnet, dass** die erste Signalisierungsinformation (41) durch Betätigung virtueller und/oder physischer Schaltelemente des ersten Telekommunikationsendgeräts (1) erfolgt.

12. Verfahren nach einem der vorhergehenden Ansprüche, **dadurch gekennzeichnet, dass** die zweite Signalisierungsinformation (42) durch Betätigung virtueller und/oder physischer Schaltelemente des zweiten Telekommunikationsendgeräts (2) erfolgt.

13. System zur Verbesserung der Funktionalität eines Videotelefonats zwischen einem ersten Telekommunikationsendgerät (1) und einem zweiten Telekommunikationsendgerät (2) über ein Telekommunikationsnetz (5), wobei das System mindestens das erste Telekommunikationsendgerät (1) und das zweite Telekommunikationsendgerät (2), eine erste dem ersten Telekommunikationsendgerät (1) wenigstens zugeordnete Wiedergabevorrichtung (6), eine zweite dem zweiten Telekommunikationsendgerät (2) wenigstens zugeordnete Wiedergabevorrichtung (7), mindestens einen der Steuereinheit (10) wenigstens zugeordneten Aufnahmespeicher (11) und das Telekommunikationsnetz (5) aufweist, wobei das Telekommunikationsnetz mindestens eine Steuereinheit (10) zur Steuerung des Videotelefonats aufweist, wobei die Steuereinheit (10) so konfiguriert ist, dass sie das Videotelefonat zwischen dem ersten Telekommunikationsendgerät (1) und dem zweiten Telekommunikationsendgerät (2) aufbaut, wobei das System so konfiguriert ist, dass
- während des Videotelefonats durch das erste Telekommunikationsendgerät (1) eine eine Aufnahmeanforderung (51) repräsentierende erste Signalisierungsinformation (41) an die Steuereinheit (10) gesendet wird,
- die Aufnahmeanforderung (51) durch das zweite Telekommunikationsendgerät (2) mit der zweiten Wiedergabevorrichtung (7) wiedergegeben wird,
- eine eine Anforderungsantwort (52) repräsentierende zweite Signalisierungsinformation (42) durch das zweite Telekommunikationsendgerät (2) an die Steuereinheit (10) gesendet wird; wobei
- im Falle einer bestätigenden zweiten Signalisierungsinformation (42) des zweiten Telekommunikationsendgeräts (2) der Videodatenstrom (30) ausgehend von einem gegenüber dem Zeitpunkt der ersten Signalisierungsinformation (41) um ein Anfragezeitintervall von mindestens 10s zurückliegenden Zeitpunkt durch den Aufnahmespeicher (11) gespeichert und als Speichervideodaten (31) abrufbar bereit gestellt wird;
- im Fall einer ablehnenden zweiten Signalisierungsinformation (42) des zweiten Telekommunikationsendgeräts (2) die Anforderungsantwort (52) durch das erste Telekommunikationsendgerät (1) mit der ersten Wiedergabevorrichtung (6) wiedergegeben wird.

14. System nach Anspruch 13, **dadurch gekennzeichnet, dass** mindestens eines der beteiligten Telekommunikationsendgeräte ein Mobilgerät ist.

15. System nach einem der Ansprüche 13 und 14, **dadurch gekennzeichnet, dass** die Speichervideodaten in einem Pufferspeicher (11) gespeichert sind oder in mindestens einem Medienspeicher (12), der mindestens einem Pufferspeicher (11) wenigstens zugeordnet ist, wobei der mindestens eine Pufferspeicher der Steuereinheit wenigstens zugeordnet ist.

## Claims

1. Method for improving the functionality of a video call by the use of a telecommunication network (5), wherein the video call represents a video data stream (30) between an initial telecommunication terminal (1) and a second telecommunication terminal (2), wherein an initial reproduction device (6) is at least assigned to the initial telecommunication terminal (1) and a second reproduction device (7) is at least assigned to the second telecommunication terminal (2), wherein the telecommunication network (5) has at least a control unit (10) for controlling the video call, wherein the control unit (10) initiates the video call between the initial telecommunication terminal (1) and the second telecommunication terminal (2), wherein the control unit (10) is assigned at least one recording memory (11) as a minimum, wherein the method comprises at least the following steps:
- during the video call the initial telecommunication terminal (1) sends initial signalling information (41) representing a recording request (51) to the control unit (10),
- the recording request (51) is reproduced by the second telecommunication terminal (2) with the second reproduction device (7),
- second signalling information (42) representing a request reply (52) is sent by the second telecommunication terminal (2) to the control unit (10); wherein
- in the case of confirmatory second signalling information (42) from the second telecommunication terminal (2) the video data stream (30) is stored by the recording memory (11), starting from a point in time preceding the point in time of the initial signalling information (41) by a query time interval of at least 10 seconds, and is provided as memory video data (31) which is retrievable;
- in the case of negative second signalling information (42) from the second telecommunication terminal (2), the request reply (52) is reproduced by the initial telecommunication terminal (1) with the initial reproduction device (6).

2. Method according to claim 1, **characterised in that** in addition to the initial telecommunication terminal (1) and the second telecommunication terminal (2) at least one additional second telecommunication terminal (2') participates in the video call.

3. Method according to any one of the preceding claims, **characterised in that** the control unit (10) sends the recording request (51) to the second telecommunication terminal (2) as additional initial signalling information (41') and/or as additional information (51') in the video data stream (30).

4. Method according to any one of the preceding claims, **characterised in that** the recording memory (11) is at least a buffer memory, wherein the storage of the memory video data (31) is performed by the buffer memory or by at least one media memory (12) assigned at least to the buffer memory.

5. Method according to any one of the preceding claims, **characterised in that** the memory video data (31) comprise the video data stream (30) of the video call from its beginning, or portions of the video data stream (31), wherein at the time of the recording request at least a portion of the video call is already in the past by at least the length of the query time interval.

6. Method according to any one of the preceding claims, **characterised in that** the method additionally comprises the steps, according to which
- the recording request (51) is affirmed with restrictions by the second telecommunication terminal (2), particularly such that a different query time interval is proposed;
- third signalling information (43) representing a further recording request (53) is sent to the control unit (10) by the second telecommunication terminal (2),
- the further recording request (53) by the initial telecommunication terminal (1) is reproduced with the initial reproduction device (6),
- fourth signalling information (44) representing a further request reply (54) is sent to the control unit (10) by the initial telecommunication terminal (1); wherein
- in the case of confirmatory fourth signalling information (44) from the initial telecommunication terminal (1), the video data stream (30) is stored by the recording memory (11) starting from a point in time preceding the point in time of the initial signalling information (41) by the new query time interval, and is provided as memory video data (31) which is retrievable;
- in the case of negative fourth signalling information (44) from the initial telecommunication terminal (1) the further request reply (54) is reproduced by the second telecommunication terminal (2) with the second reproduction device (7);
- in the case of restrictive fourth signalling information (44) according to this claim the method described here is preferably executed again.

7. Method according to any one of the preceding claims, **characterised in that** the memory video data are provided via a secured or unsecured connection on the Internet or via another medium for retrieval by the initial telecommunication terminal (1) and/or the second telecommunication terminal (2) and/or a further telecommunication terminal, particularly for a limited period only.

8. Method according to any one of the preceding claims, **characterised in that** access to the memory video data is only permitted after successful authentication, preferably by means of authentication data which in the case of confirmatory second signalling information (42) are reproduced by the initial telecommunication terminal (1) and/or the second telecommunication terminal (2) via the initial reproduction device (6) and/or second reproduction device (7).

9. Method according to any one of the preceding claims, **characterised in that** the query time interval is set, preferably to the last 5 minutes or the last 10 minutes of the video call, or by the telecommunication network (5), preferably depending on the network load and/or the memory usage of the recording memory (11), or is set to be freely selectable or set at staggered time intervals by the initial telecommunication terminal (1) and/or the second telecommunication terminal (2).

10. Method according to any one of the preceding claims, **characterised in that** the duration of the memory video data (31) is subject to an upper time limit and/or an upper data volume limit.

11. Method according to any one of the preceding claims, **characterised in that** the initial signalling information (41) is provided by operating virtual and/or physical switch elements of the initial telecommunication terminal (1).

12. Method according to any one of the preceding claims, **characterised in that** the second signalling information (42) is provided by operating virtual and/or physical switch elements of the second telecommunication terminal (2).

13. System for improving the functionality of a video call between an initial telecommunication terminal (1) and a second telecommunication terminal (2) via a telecommunication network (5), wherein the system has at least the initial telecommunication terminal (1) and the second telecommunication terminal (2), an initial reproduction device (6) assigned at least to the initial telecommunication terminal (1), a second reproduction device (7) assigned at least to the second telecommunication terminal (2), at least a recording memory (11) assigned at least to the control unit (10), and the telecommunication network (5), wherein the telecommunication network has at least a control unit (10) for controlling the video call, wherein the control unit (10) is configured such that it initiates the video call between the initial telecommunication terminal (1) and the second telecommunication terminal (2), wherein the system is configured such that
- during the video call initial signalling information (41) representing a recording request (51) is sent to the control unit (10) by the initial telecommunication terminal (1),
- the recording request (51) is reproduced by the second telecommunication terminal (2) with the second reproduction device (7),
- second signalling information (42) representing a request reply (52) is sent to the control unit (10) by the second telecommunication terminal (2); wherein
- in the case of confirmatory second signalling information (42) from the second telecommunication terminal (2), the video data stream (30) is stored by the recording memory (11) starting from a point in time preceding the point in time of the initial signalling information (41) by a query time interval of at least 10 seconds, and is provided as memory video data (31) which is retrievable;
- in the case of negative second signalling information (42) from the second telecommunication terminal (2), the request reply (52) is reproduced by the initial telecommunication terminal (1) with the initial reproduction device (6).

14. System according to claim 13, **characterised in that** at least one of the participating telecommunication terminals is a mobile device.

15. System according to any one of claims 13 and 14, **characterised in that** the memory video data are stored in a buffer memory (11) or in at least one media memory (12), which is assigned as a minimum to at least one buffer memory (11), wherein the at least one buffer memory is assigned at least to the control unit.

## Revendications

1. Procédé d'amélioration de la fonctionnalité d'un appel vidéo en utilisant un réseau de télécommunications (5), dans lequel l'appel vidéo représente un flux de données vidéo (30) entre un premier terminal de télécommunication (1) et un deuxième terminal de télécommunication (2), dans lequel un premier appareil de reproduction (6) est au moins ordonné au premier terminal de télécommunication (1) et un deuxième appareil de reproduction (7) est au moins ordonné au deuxième terminal de télécommunication (2), dans lequel le réseau de télécommunications (5) comporte au moins une unité de commande (10) pour commander l'appel vidéo, dans lequel l'unité de commande (10) établit l'appel vidéo entre le premier terminal de télécommunication (1) et le deuxième terminal de télécommunication (2), dans lequel au moins une mémoire d'enregistrement (11) est au moins ordonnée à l'unité de commande (10), dans lequel le procédé comprend au moins les étapes suivantes :
- pendant l'appel vidéo, une première information de signalisation (41) représentant une demande de réception (51) est envoyée par le premier terminal de télécommunication (1) à l'unité de commande (10),
- la demande de réception (51) est reproduite par le deuxième terminal de télécommunication (2) avec le deuxième appareil de reproduction (7),
- une deuxième information de signalisation (42) représentant une réponse à la demande (52) est envoyée par le deuxième terminal de télécommunication (2) à l'unité de commande (10) ; dans lequel
- dans le cas d'une deuxième information de signalisation (42) de confirmation du deuxième terminal de télécommunication (2), le flux de données vidéo (30) est enregistré par la mémoire d'enregistrement (11) à partir d'un moment précédent le moment de la première information de signalisation (41) d'environ un intervalle de requête d'au moins 10 s et est préparé comme données vidéo (31) enregistrées de manière consultable ;
- dans le cas d'une deuxième information de signalisation (42) de refus du deuxième terminal de télécommunication (2) la réponse à la demande (52) est reproduite par le premier terminal de télécommunication (1) avec le premier appareil de reproduction (6).

2. Procédé selon la revendication 1, **caractérisé en ce qu'**outre le premier terminal de télécommunication (1) et le deuxième terminal de télécommunication (2) au moins un deuxième terminal de télécommunication supplémentaire (2') participe à l'appel vidéo.

3. Procédé selon l'une des revendications précédentes, **caractérisé en ce que** la demande de réception (51) est envoyée au deuxième terminal de télécommunication (2) par l'unité de commande (10) en tant que première information de signalisation supplémentaire (41') et/ou en tant qu'information additionnelle (51') dans le flux de données vidéo (30).

4. Procédé selon l'une des revendications précédentes, **caractérisé en ce que** la mémoire d'enregistrement (11) est au moins une mémoire tampon, dans lequel l'enregistrement des données vidéo enregistrées (31) est effectué par la mémoire tampon ou par au moins une mémoire sur support (12) au moins ordonnée à la mémoire tampon.

5. Procédé selon l'une des revendications précédentes, **caractérisé en ce que** les données vidéo enregistrées (31) comprennent le flux de données vidéo (30) de l'appel vidéo depuis le début ou des parties du flux de données vidéo (31), dans lequel au moins une partie de l'appel vidéo précède le moment de la demande de réception d'au moins environ l'intervalle de requête.

6. Procédé selon l'une des revendications précédentes, **caractérisé en ce que** le procédé comprend en outre les étapes, à la suite desquelles
- une réponse affirmative limitée est donnée à la demande de réception (51) par le deuxième terminal de télécommunication (2), en particulier de sorte qu'un autre intervalle de requête est proposé ;
- une troisième information de signalisation (43) représentant une demande de réception ultérieure (53) est envoyée par le deuxième terminal de télécommunication (2) à l'unité de commande (10),
- la demande de réception ultérieure (53) est reproduite par le premier terminal de télécommunication (1) avec le premier appareil de reproduction (6),
- une quatrième information de signalisation (44) représentant une réponse ultérieure à la demande (54) est envoyée par le premier terminal de télécommunication (1) à l'unité de commande (10) ; dans lequel
- dans le cas d'une quatrième information de signalisation (44) de confirmation du premier terminal de télécommunication (1), le flux de données vidéo (30) est enregistré par la mémoire d'enregistrement (11) à partir d'un moment précédent le moment de la première information de signalisation (41) d'environ le nouvel intervalle de requête d'au moins 10 s et est préparé comme données vidéo (31) enregistrées de manière consultable ;
- dans le cas d'une quatrième information de signalisation (44) de refus du premier terminal de télécommunication (1) la réponse à la demande ultérieure (54) est reproduite par le deuxième terminal de télécommunication (2) avec le deuxième appareil de reproduction (7) ;
- de préférence dans le cas d'une quatrième information de signalisation réduite (44) conforme à cette revendication, le procédé décrit ici est à nouveau mis en œuvre.

7. Procédé selon l'une des revendications précédentes, **caractérisé en ce que** les données vidéo enregistrées par le biais d'une connexion Internet non-sécurisée ou sécurisée ou par le biais d'un autre moyen sont préparées pour récupération par le premier terminal de télécommunication (1) et/ou le deuxième terminal de télécommunication (2) et/ou un terminal de télécommunication ultérieur, en particulier uniquement pour un temps limité.

8. Procédé selon l'une des revendications précédentes, **caractérisé en ce que** l'accès aux données vidéo enregistrées n'est autorisé qu'après une authentification réussie, de préférence par des données d'authentification, lesquelles sont reproduites par le biais du premier appareil de reproduction (6) et/ou du deuxième appareil de reproduction (7) dans le cas d'une deuxième information de signalisation (42) de confirmation par le premier terminal de télécommunication (1) et/ou le deuxième terminal de télécommunication (2).

9. Procédé selon l'une des revendications précédentes, **caractérisé en ce que** l'intervalle de requête est fixé, de préférence sur les 5 dernières minutes ou les 10 dernières minutes de l'appel vidéo, ou est fixé par le réseau de télécommunications (5), de préférence en fonction de la charge réseau et/ou de l'allocation de mémoire de la mémoire d'enregistrement (11), ou peut être librement choisi ou fixé à intervalles de temps échelonnés par le premier terminal de télécommunication (1) et/ou le deuxième terminal de télécommunication (2).

10. Procédé selon l'une des revendications précédentes, **caractérisé en ce que** la durée des données vidéo enregistrées (31) est soumise à une limite supérieure de temps et/ou de volume de données.

11. Procédé selon l'une des revendications précédentes, **caractérisé en ce que** la première information de signalisation (41) résulte de l'actionnement d'un élément commutateur virtuel et/ou physique du premier terminal de télécommunication (1).

12. Procédé selon l'une des revendications précédentes, **caractérisé en ce que** la deuxième information de signalisation (42) résulte de l'actionnement d'un élément commutateur virtuel et/ou physique du deuxième terminal de télécommunication (2).

13. Système d'amélioration de la fonctionnalité d'un appel vidéo entre un premier terminal de télécommunication (1) et un deuxième terminal de télécommunication (2) par le biais d'un réseau de télécommunications (5), dans lequel le système comporte au moins le premier terminal de télécommunication (1) et le deuxième terminal de télécommunication (2), un premier appareil de reproduction (6) au moins ordonné au premier terminal de télécommunication (1), un deuxième appareil de reproduction (7) au moins ordonné au deuxième terminal de télécommunication (2), au moins une mémoire d'enregistrement (11) au moins ordonnée à l'unité de commande (10) et le réseau de télécommunications (5), dans lequel le réseau de télécommunications comporte au moins une unité de commande (10) pour commander l'appel vidéo, dans lequel l'unité de commande (10) est configurée de façon à établir l'appel vidéo entre le premier terminal de télécommunication (1) et le deuxième terminal de télécommunication (2), dans lequel le système est configuré de telle sorte que
- pendant l'appel vidéo, une première information de signalisation (41) représentant une demande de réception (51) est envoyée par le premier terminal de télécommunication (1) à l'unité de commande (10),
- la demande de réception (51) est reproduite par le deuxième terminal de télécommunication (2) avec le deuxième appareil de reproduction (7),
- une deuxième information de signalisation (42) représentant une réponse à la demande (52) est envoyée par le deuxième terminal de télécommunication (2) vers l'unité de commande (10) ; dans lequel
- dans le cas d'une deuxième information de signalisation (42) de confirmation du deuxième terminal de télécommunication (2), le flux de données vidéo (30) est enregistré par la mémoire d'enregistrement (11) à partir d'un moment précédent le moment de la première information de signalisation (41) d'environ un intervalle de requête d'au moins 10 s et est préparé comme données vidéo (31) enregistrées de manière consultable ;
- dans le cas d'une deuxième information de signalisation (42) de refus du deuxième terminal de télécommunication (2) la réponse à la demande (52) est reproduite par le premier terminal de télécommunication (1) avec le premier appareil de reproduction (6).

14. Système selon la revendication 13, **caractérisé en ce qu'**au moins un des terminaux de télécommunication impliqués est un terminal mobile.

15. Système selon l'une des revendications 13 et 14, **caractérisé en ce que** les données vidéo enregistrées sont enregistrées dans une mémoire tampon (11) ou dans au moins une mémoire sur support (12) au moins ordonnée à la mémoire tampon (11), dans lequel l'au moins une mémoire tampon est au moins ordonnée à l'unité de commande.
